# EUROPÄISCHE PATENTSCHRIFT

(11) **EP 2 768 660 B1**
(45) Veröffentlichungstag und Bekanntmachung des Hinweises auf die Patenterteilung: **26.02.2020**
(21) Anmeldenummer: 12784441.3
(22) Anmeldetag: 17.10.2012
(51) Int. Cl.: B29D 11/00

(54) **VERFAHREN ZUM HERSTELLEN VON MIKROHOHLSPIEGELN**
METHOD FOR PRODUCING MICRO-CONCAVE MIRRORS
PROCÉDÉ DE RÉALISATION DE MICRO-MIROIRS CREUX

(30) Priorität: 19.10.2011 DE 102011116408
(43) Veröffentlichungstag der Anmeldung: 27.08.2014
(73) Patentinhaber: Giesecke+Devrient Currency Technology GmbH, 81677 München (DE)
(72) Erfinder: KECK, Angelika, 81667 München (DE); HEINE, Astrid, 85551 Kirchheim (DE); MENGEL, Christoph, 83607 Holzkirchen (DE)
(86) Internationale Anmeldenummer: PCT/EP2012/004343
(87) Internationale Veröffentlichungsnummer: WO 2013/056825

(56) Entgegenhaltungen:
- WO-A1-2011/015384
- WO-A1-2011/107793
- WO-A2-2011/012460
- DE-A1-102004 046 695
- DE-A1-102006 006 501
- TW-B- 594 848
- US-A1- 2007 246 932
- US-A1- 2011 007 374

## Beschreibung

Die Erfindung betrifft ein Herstellungsverfahren für Mikrohohlspiegel und für ein Substrat mit Mikrohohlspiegeln, welches als ein Verifikationsmittel oder Sicherheitsmerkmal für einen Datenträger eingesetzt werden kann.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Gegenstands gestatten und die zugleich als Schutz vor unerlaubter Reproduktion dienen.

Der Begriff "Datenträger" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, und auch kartenförmige Datenträger, insbesondere Chipkarten, sowie Produktsicherungselemente, wie Etiketten, Siegel, Verpackungen und dergleichen.

Ein Sicherheitselement kann in einen solchen Datenträger, beispielsweise in eine Banknote oder eine Chipkarte, eingebettet sein oder als selbsttragendes Transferelement ausgebildet sein, beispielsweise als Patch oder als Etikett, das nach seiner Herstellung auf einen zu sichernden Datenträger oder sonstigen Gegenstand aufgebracht wird.

Sicherheitselemente erzeugen häufig einen gut sichtbaren optischen Eindruck, weswegen solche Sicherheitselemente neben ihrer Funktion als Sicherungsmittel bisweilen auch ausschließlich als dekorative Elemente verwendet werden.

Um eine Fälschung oder Nachstellung von Sicherheitselementen beispielsweise mit hochwertigen Farbfotokopiergeräten zu verhindern, weisen Sicherheitselemente häufig optisch variable Elemente auf, die dem Betrachter unter verschiedenen Betrachtungswinkeln einen unterschiedlichen Bildeindruck vermitteln und etwa einen unterschiedlichen Farbeindruck oder auch unterschiedliche graphische Motive zeigen. In diesem Zusammenhang ist beispielsweise die Verwendung von beugungsoptischen Mikro- oder Nanostrukturen in Form von Prägehologrammen oder anderen hologrammähnlichen Beugungsstrukturen bekannt.

Aus WO 2010/015383 A1 ist ein Verfahren zum Herstellen von Sicherheitselementen aus Mikrolinsen bekannt, bei dem ein Trägersubstrat im Stichtiefdruckverfahren so vorstrukturiert wird, dass auf der Vorderseite des Trägersubstrats Erhebungen und auf der Rückseite den Erhebungen im Wesentlichen entsprechende Vertiefungen entstehen. Durch Auftragen von transluzentem Kunststoff auf die Seite des Trägersubstrats, auf der sich die Vertiefungen befinden, werden Mikrolinsen gebildet. Sicherheitselemente mit Mikrolinsen haben jedoch den Nachteil, dass sich die optischen Eigenschaften der Mikrolinsen bei einer Beschichtung ihrer Oberfläche mit einem Lack oder Klebstoff verändern oder verschlechtern. Derartige Sicherheitselemente können somit nicht ohne Weiteres in einen Datenträger eingebettet werden. Des Weiteren kann ihre Oberfläche nicht durch eine schmutzabweisende Beschichtung gegenüber Verschmutzung geschützt werden.

Die Verwendung von Mikrohohlspiegeln anstelle oder als Ergänzung von Mikrolinsen ist beispielsweise aus WO 2010/136339 A2 oder WO 2011/012460 A2 bekannt. Nachteil dieser Mikrohohlspiegel ist jedoch, dass das Verfahren zu ihrer Herstellung aufwendig und kostenintensiv ist. Dies erhöht zwar den Fälschungsschutz, da der Aufwand der Nachahmung für einen Fälscher wesentlich erhöht wird, bei Sicherheitselementen jedoch, die als Ergänzung weiterer Sicherheitselemente dienen oder die einen geringeren Fälschungsschutz erfordern, sind diese Verfahren nur eingeschränkt wirtschaftlich anwendbar.

Aus US 2007/0246932 A1, DE 10 2006 006 501 A1 oder DE 10 2004 046 695 A1 ist ein Sicherheitselement mit einer optisch variablen Struktur bekannt, die eine Prägestruktur und eine Beschichtung aufweist, wobei die Prägestruktur und die Beschichtung so kombiniert sind, dass wenigstens Teile der Beschichtung bei senkrechter Betrachtung vollständig sichtbar sind, bei Schrägbetrachtung aber verdeckt werden.

Davon ausgehend liegt der Erfindung die Aufgabe zugrunde, die Nachteile des Standes der Technik zu vermeiden und insbesondere ein Herstellungsverfahren für Mikrohohlspiegel und für ein Substrat mit Mikrohohlspiegeln anzugeben, das auch als ein Verifikationsmittel oder Sicherheitsmerkmal für einen Datenträger eingesetzt werden kann, einfach aufgebaut ist und eine vereinfachte Herstellung gestattet.

Diese Aufgabe wird erfindungsgemäß durch ein Herstellungsverfahren für Mikrohohlspiegel mit den Merkmalen des unabhängigen Anspruches 1 gelöst. Die abhängigen Ansprüche betreffen bevorzugte Ausgestaltungen und Weiterbildungen der Erfindung.

Das erfindungsgemäße Verfahren zum Herstellen von Mikrohohlspiegeln umfasst die Schritte Bereitstellen eines Trägersubstrats und Vorstrukturieren des Trägersubstrats, so dass auf einer Rückseite des Trägersubstrats Erhebungen und auf einer der Rückseite gegenüberliegenden Vorderseite des Trägersubstrats den Erhebungen im Wesentlichen entsprechende Vertiefungen entstehen. Zusätzlich umfasst das Verfahren den Schritt, dass eine reflektierende Beschichtung auf zumindest eine Seite des Trägersubstrats im Bereich der Erhebungen oder Vertiefungen aufgetragen wird, so dass durch die Vertiefungen von der Vorderseite des Substrats aus gesehen Mikrohohlspiegel gebildet werden.

Das Vorstrukturieren des Trägersubstrats erfolgt durch Verprägen, insbesondere durch Verprägen im Stichtiefdruckverfahren. Bei dem Verprägen des Trägersubstrats im Stichtiefdruckverfahren mit einer Tiefdruckplatte weisen die Vertiefungen in der Tiefdruckplatte eine Gravurtiefe von etwa 20 µm bis etwa 150 µm und eine Gravurbreite von etwa 50 µm bis etwa 500 µm, bevorzugt von etwa 250 µm bis etwa 300 µm auf. Die Vertiefungen werden bevorzugt in einer regelmäßigen, insbesondere rasterartigen Anordnung erzeugt. Hierbei ist auch eine Kombination aus sphärischen Linsen mit Zylinderlinsen möglich. Neben einer regelmäßigen rasterartigen Anordnung ist auch eine unregelmäßige Anordnung möglich, beispielsweise eine Anordnung mit einer Kombination aus unterschiedlichen Winkeln, Formen und Tiefen und/oder Abständen.

In einer weiteren bevorzugten Ausführungsform wird die reflektierende Beschichtung so auf das Trägersubstrat aufgetragen, dass sie zwischen den Mikrohohlspiegeln räumlich unterbrochen ist oder eine durchgehende Schicht bildet. Dadurch wird gewährleistet, dass mindestens die Vertiefungen, die die Mikrohohlspiegel bilden, die reflektierende Beschichtung aufweisen. Die zwischen den Mikrohohlspiegeln-liegende Fläche kann entweder ebenfalls eine reflektierende Beschichtung aufweisen oder nicht. Auch ein lediglich partielles Auftragen einer reflektierenden Beschichtung ist möglich.

Das Aufbringen der reflektierenden Beschichtung erfolgt vorzugsweise drucktechnisch und hierbei vorzugsweise im Siebdruck-, Stichtiefdruck-, Offsetdruck- oder Flexodruckverfahren. Alternativ erfolgt das Aufbringen der reflektierenden Beschichtung durch Applizieren einer vorgefertigten Schicht mittels Transfer- oder Laminierverfahren. Grundsätzlich sind alle aus dem Stand der Technik bekannten Verfahren anwendbar, mit denen die reflektierende Beschichtung auf das Trägersubstrat aufgebracht werden kann.

Erfindungsgemäß werden die Vertiefungen im Trägersubstrat mit einem transparenten Material gefüllt und auf die Seite des transparenten Materials, die den Vertiefungen gegenüberliegt, eine Mikrostruktur aufgebracht, bevorzugt aufgedruckt oder aufgeprägt. Hierbei wird die Dicke oder die Form des transparenten Materials vorzugsweise so gewählt, dass die Mikrostruktur in der Fokusebene der Mikrohohlspiegel liegt. Die Mikrohohlspiegel bilden dabei zusammen mit den Mikrostrukturen aus dem Stand der Technik bekannte optisch variable Effekte, insbesondere eine Moire-Struktur oder einen Moire-Magnifier, bei denen die Mikrostrukturelemente insbesondere vergrößert abgebildet werden, sich für einen Betrachter bevorzugt scheinbar vor oder hinter der Ebene des Trägersubstrats befinden und/oder auch einen Kippeffekt aufweisen, d.h. bei Verkippen des Trägersubstrats ihre Lage relativ zum Trägersubstrat scheinbar ändern. Die Erfindung betrifft somit besonders bevorzugt die Erzeugung optisch variabler Effekte wie beispielsweise "Moiré-Magnifier" zur Verifikation von Banknoten mittels drucktechnisch erzeugter Hohlspiegel.

Der Erfindung liegt die Erkenntnis zugrunde, dass ein vorstrukturiertes Trägersubstrat mit Erhebungen und Vertiefungen als Abformkörper zur Herstellung von Mikrohohlspiegeln verwendet werden kann. Ein solches vorstrukturiertes Trägersubstrat kann durch Verprägen eines geeigneten Trägersubstrats geschaffen werden. Hierzu können an sich bekannte Prägewerkzeuge verwendet werden. Bevorzugt wird das Trägersubstrat in einem Stichtiefdruckverfahren verprägt. Dabei werden in einer zur Verprägung verwendeten Tiefdruckplatte Vertiefungen, insbesondere Gravuren, geschaffen, welche auf dem Trägersubstrat geeignete Prägestrukturen erzeugen. Anhand von Gravurtiefe und -breite kann hierbei die Form und Abmessung der Erhebungen und Vertiefungen und somit der herzustellenden Mikrohohlspiegel gezielt beeinflusst werden.

Bei einem farbführenden Stichtiefdruckverfahren sind die Vertiefungen der Tiefdruckplatte mit Farbe gefüllt, so dass das Trägersubstrat nicht nur verformt, sondern auch mit Farbe beaufschlagt wird. Dies hat den Vorteil, dass bei Verwendung von reflektierender Farbe, die auftreffendes Licht oder auftreffende elektromagnetische Strahlung in einem bevorzugten Wellenlängenbereich spiegelnd nahezu vollständig reflektiert, die Vertiefungen und die zugehörige reflektierende Beschichtung, die die Mikrohohlspiegel bilden, in einem Arbeitsgang erzeugt werden können.

Alternativ kann die Herstellung der Mikrohohlspiegel auch mit einer Blindverprägung erfolgen, wobei das Verprägen mittels einer Tiefdruckplatte ohne Farbfüllung geschieht, das heißt in den Vertiefungen der Tiefdruckplatte ist keine Druckfarbe vorgesehen. Dabei geschieht das Verprägen unter sehr hohem Anpressdruck, so dass zwischen der Tiefdruckplatte und einer Gegendruckplatte, welche mit einem speziellen dünnen Gummituch bespannt sein kann, sehr hohe Kräfte wirken, die ein dauerhaftes Verprägen des Trägersubstrats gewährleisten. Die reflektierende Beschichtung wird in diesem Fall vor oder nach der Blindverprägung auf zumindest eine der beiden Seiten des blindverprägten Trägersubstrats im Bereich der Erhebungen oder Vertiefungen aufgebracht.

Das Stichtiefdruckverfahren ist in beiden Ausführungsformen vorzugsweise ein Linien- bzw. Rastertiefdruck-Verfahren, bei welchem in die Stichtiefdruckplatte mithilfe eines manuell oder maschinell geführten, rotierenden Stichels Vertiefungen, beispielsweise in Form von Linien, in die Druckplatte eingraviert werden. Darüber hinaus kann eine Tiefdruckplatte selbstverständlich auch mittels eines geeigneten Lasers mit den entsprechenden Gravuren versehen werden.

Die Oberflächenform eines Mikrohohlspiegels wird somit durch die Form der Vertiefung bestimmt. Im Stich- oder Rastertiefdruck weist das mit einer entsprechend ausgestalteten Tiefdruckplatte verprägte Trägersubstrat eine für die Ausbildung von Mikrohohlspiegeln geeignete nahezu sphärische oder zylinderförmige Prägestruktur auf. Eine solche Prägestruktur ergibt sich auf dem Trägersubstrat sowohl bei kugel-, pyramiden-, polygon-, fresnelbzw. linienförmigen oder asphärischen Vertiefungen in der Tiefdruckplatte als auch bei anders gestalteten Gravuren oder Ätzungen.

Die erzeugten Mikrohohlspiegel können prinzipiell sowohl als sphärische als auch als asphärische, als auch als Hohlspiegel auf Basis von Fresnel-Linsenformen sowie als zylindrische Hohlspiegel, insbesondere als geschwungene zylindrische Hohlspiegel, ausgebildet werden.

Weiterer besonderer Vorteil des Stichtiefdruckverfahrens ist, dass durch die Vertiefungen in der Tiefdruckplatte auf der Seite des Trägersubstrats, die der Tiefdruckplatte zugewandt ist, Erhebungen entstehen und auf der gegenüberliegenden Seite des Substrats entsprechende Vertiefungen. Die Vertiefungen in der Tiefdruckplatte sind dabei derart ausgebildet, dass die Erhebungen und/oder die Vertiefungen des verprägten Substrats zum Abformen von Mikrohohlspiegeln geeignet sind. Damit wird eine einfache Möglichkeit zur Herstellung von zur Abformung von Mikrohohlspiegeln geeigneten Erhebungen und/oder Vertiefungen geschaffen.

Bei einem opaken oder nur gering transluzentem Trägersubstrat wird die reflektierende Beschichtung im Bereich der Vertiefungen vorzugsweise auf der Vorderseite des Trägersubstrats vollflächig aufgebracht, die einem Betrachter zugewandt ist. Die auf das Sicherheitselement auftreffenden elektromagnetischen Strahlen werden somit direkt von der reflektierenden Beschichtung reflektiert, ohne durch das Trägersubstrat, das die Reflexion der elektromagnetischen Strahlung reduzieren würde, abgeschwächt zu werden.

Bei einem transparenten oder nahezu vollständig transluzenten Trägersubstrat kann die reflektierende Beschichtung im Bereich der Vertiefungen alternativ auch auf der Rückseite des Trägersubstrats vollflächig aufgebracht werden. Die auf das Sicherheitselement auftreffenden elektromagnetischen Strahlen treten somit zunächst durch das Substrat hindurch, werden von der reflektierenden Beschichtung reflektiert, um dann erneut durch das Trägersubstrat hindurchzutreten. Aufgrund der geringen Schwächung im Trägersubstrat bzw. des geringen Energieverlusts, tritt die reflektierte elektromagnetische Strahlung nahezu vollständig bzw. ohne wesentlichen Energieverlust aus dem Trägersubstrat wieder aus.

Bei Aufbringung der reflektierenden Beschichtung auf die Rückseite des Trägersubstrats kann die Geometrie der Mikrohohlspiegel derart an die Dicke des Trägersubstrats angepasst werden, dass die Mikrostrukturen direkt auf die der Beschichtung gegenüberliegenden Seite des Substrats aufgebracht werden können und dabei direkt im Fokus der Mikrohohlspiegel liegen. Auf die Füllung der Mikrohohlspiegel mit dem transparenten Material kann in diesem Fall somit verzichtet werden. Beträgt beispielsweise die Dicke des Trägersubstrats 80 µm, so kann die Geometrie der Mikrohohlspiegel so gewählt werden, dass der Fokusabstand, d.h. der Abstand vom Scheitel eines Mikrohohlspiegels zu dessen Brennebene, ebenfalls 80 µm beträgt und die_ Brennebene auf der Oberfläche des Substrats liegt, die der Beschichtung gegenüberliegt.

Im Rahmen der vorliegenden Beschreibung bedeutet "transluzent" durchscheinend im Sinn einer gewissen oder vollständigen Lichtdurchlässigkeit und schließt somit auch Transparenz mit ein. Eine transluzente Schicht erlaubt es, die hinter bzw. unter ihr befindlichen Objekte wahrzunehmen, auch wenn durch die transluzente Schicht die Helligkeit der Objekte reduziert und/oder die Farbe der Objekte verändert sein kann. Unter transluzentem Material, wie Kunststoff, Lack oder Druckfarbe, wird entsprechend ein transparentes oder semitransparentes Material, insbesondere auch eine lasierende Druckfarbe, verstanden.

Das Trägersubstrat umfasst vorzugsweise Papier und/oder eine Trägerfolie, insbesondere eine transluzente Trägerfolie. Im einfachsten Fall besteht das Trägersubstrat vollständig entweder aus Papier oder aus Kunststoff. Das Trägersubstrat kann jedoch auch bereichsweise aus verschiedenen Materialien bestehen, und insbesondere in einem Bereich aus Papier und zugleich in einem anderen Bereich aus Kunststoff, vorzugsweise aus einer transluzenten Trägerfolie, bestehen. Dadurch ist es möglich, verschiedene Materialien als Trägersubstrat in einem Arbeitsgang zu verprägen. Unter transluzenter Trägerfolie wird hierbei entweder eine transparente oder eine semitransparente Trägerfolie verstanden, beispielsweise eine lasierende Trägerfolie, welche beispielsweise Polyamid, Polyester, Polyethylen oder biaxial orientiertes Polypropylen (BOPP) umfasst.

Vorzugsweise sind die Mikrohohlspiegel voneinander beabstandet und räumlich voneinander getrennt angeordnet. Dadurch bildet sich in jeder Vertiefung eigenständig ein Mikrohohlspiegel aus, ohne dass eine gegenseitige Beeinflussung benachbarter Mikrohohlspiegel auftritt. Dabei ist der Abstand benachbarter Mikrohohlspiegel zweckmäßig so gering wie möglich gewählt, um eine möglichst hohe Flächendeckung und damit in Zusammenwirkung beispielsweise mit einem im Folgenden näher erläuterten Sicherheitselement eine kontrastreiche Darstellung zu gewährleisten. Es ist jedoch auch möglich, die Mikrohohlspiegel zusammenhängend anzuordnen, so dass sich eine durchgehende, vollflächige Schicht aus transluzentem Kunststoff ergibt, welche die Mikrohohlspiegel umfasst.

Das Beaufschlagen der Vertiefungen mit einer reflektierenden Beschichtung auf der Vorder- oder Rückseite des Trägersubstrats geschieht, wie oben bereits ausgeführt, bevorzugt drucktechnisch, beispielsweise durch Auftragen einer Druckfarbe mit reflektierenden Pigmenten im Flexodruck- oder Siebdruckverfahren. Dies hat den Vorteil, dass sowohl die Menge als auch der Ort der aufgetragenen Druckfarbe gut gesteuert werden kann. Insbesondere ist es dadurch möglich, die einzelnen Mikrohohlspiegel mit Farben zu erzeugen, die einen unterschiedlichen Farbeindruck erzeugen. Allgemein können durch den Druck variierbare Parameter der Mikrohohlspiegel für jede dieser Mikrohohlspiegel einzeln gewählt werden. Zudem stellen das Flexodruck- und auch das Siebdruckverfahren gängige Druckverfahren dar, mit deren Hilfe auf einfache Art und Weise und somit kostengünstig sowie mit hoher Geschwindigkeit gedruckt werden kann.

Alternativ kann die reflektierende Beschichtung auch mit einem Transferverfahren auf das Trägersubstrat aufgebracht werden, wobei die reflektierende Beschichtung auf einem Transfersubstrat aufgebracht ist und beispielsweise mittels mechanischem Druck und/oder erhöhter Temperatur auf das Trägersubstrat übertragen wird. Des Weiteren kann die reflektierende Beschichtung auch mit einem Laminierverfahren auf das Trägersubstrat aufgebracht werden, wobei die reflektierende Beschichtung selbst in Form einer Folie vorliegt, die auf das Trägersubstrat laminiert wird.

Vorteilhafterweise werden zum Vorstrukturieren durch Blindverprägen in einer Tiefdruckplatte regelmäßige, beispielsweise rasterartig angeordnete, identische Vertiefungen geschaffen, wodurch eine regelmäßige Anordnung von identischen Mikrohohlspiegeln erhalten werden kann und somit ein Array aus Mikrohohlspiegeln erhalten wird. Das blindverprägte Trägersubstrat ist dabei ein Teil des Substrats mit den Mikrohohlspiegeln. Gegebenenfalls wird das Substrat auf die gewünschte Größe zugeschnitten.

Alternativ können in der Tiefdruckplatte auch Vertiefungen mit verschiedenen Breiten und/oder Tiefen vorgesehen werden. Ebenso kann eine raster- oder gitterartige Anordnung der Vertiefungen mit bereichsweise verschiedenen Winkeln oder eine partielle Anordnung solcher Vertiefungen in geometrischen Formen oder Motiven vorgesehen sein. Damit lassen sich entsprechend verschiedene Vertiefungen und Erhebungen in dem Trägersubstrat schaffen.

Die beiden folgenden bevorzugten Ausführungsformen zeigen neben den oben genannten dynamischen Bewegungseffekten auf Basis von Moire-Magnifiern weitere Anwendungen der erfindungsgemäßen Mikrohohlspiegel.

Die erste bevorzugte Ausführungsform betrifft eine Kombination von dreifarbigen Linien, die im Winkel von 60° zueinander angeordnet sind, mit einfarbigen Mikrostrukturen, die in einem Rasterfeld angeordnet sind. Diese Kombination aus dreifarbigen Linien und einfarbigen Mikrostrukturen ist in der Brennebene vor rasterartig angeordneten Mikrohohlspiegeln angeordnet. Durch den Vergrößerungseffekt der Mikrohohlspiegel entsteht durch den farbigen Eindruck der dreifarbigen Linien ein optisch dynamischer Regenbogeneffekt als Hintergrund für die dynamischen vergrößerten Mikrostrukturen. Dieser Effekt ist auch ohne Hohlspiegel mit einem Mikrolinsenfeld realisierbar, das beispielsweise aus WO 2010/015382 A2, WO 2010/015383 A1 und WO 2011/015384 A1 bekannt ist. Das Druckbild kann direkt auf den transparenten Lack gedruckt werden, oder im Falle der Selbstverifikation auf einem Bereich der Banknote, auf den dann das Mikrolinsenfeld zur Verifikation geklappt wird.

Die zweite bevorzugte Ausführungsform betrifft ein Sicherheitselement, wie es aus DE 10 2010 019 616 A1 bekannt ist. Im Gegensatz zu dem Sicherheitselement aus DE 10 2010 019 616 A1 werden in dieser Ausführungsform die beiden Informationen nicht durch einen gedruckten "Analysator" in Form eines Linienrasters, sondern durch eine rasterartige Anordnung aus Mikrolinsen oder Mikrohohlspiegeln entsprechend den oben genannten WO 2010/015382 A2, WO 2010/015383 A1 und WO 2011/015384 A1 decodiert, wobei sowohl sphärische als auch zylindrische Linsen bzw. Mikrohohlspiegel oder eine Kombination aus beiden verwendet werden können. Hierbei können entweder über Selbstverifikation die beiden Informationen im Wechsel sichtbar gemacht werden oder die Informationen können direkt auf den transparenten Lack der Anordnung aus Mikrolinsen aufgedruckt werden. Eine weitere Anwendung ist das Aufdrucken der Informationen auf einen transparenten Lack, mit welchem die Mikrohohlspiegel gefüllt werden. Es wird somit beim Kippen des Sicherheitselements oder der Banknote je nach Betrachtungswinkel mal die eine und mal die andere Information sichtbar gemacht. Anstelle eines Informationswechsels kann beispielsweise auch ein dynamischer, dreidimensionaler Effekt erzeugt werden, beispielsweise eine dreidimensional wirkende Wertzahl, die aus unterschiedlichen Betrachtungsrichtungen unterschiedliche Ansichten der dreidimensional wirkenden Wertzahl darstellt. Dieser Effekt kann wiederum mit dem oben genannten Regenbogeneffekt farbig hinterlegt werden.

Die vorliegende Erfindung zeichnet sich gegenüber aus dem Stand der Technik bekannten Sicherheitsmerkmalen durch einen sehr viel einfacheren Aufbau und ein entsprechend einfaches Herstellungsverfahren aus. Insbesondere können mehrfarbige Motive und Kippmotive in einfacher Weise geschaffen werden.

Die besonderen Vorteile gegenüber bestehenden Mikrohohlspiegeln des Standes der Technik liegen
- in der technisch einfacheren Herstellungsweise auf Basis bestehender Druck- und Prägeverfahren,
- der Größenordnung der Hohlspiegel, die sowohl die Erzeugung der Hohlspiegel mit herkömmlichen Banknotendruckverfahren ermöglicht als auch den Druck der Text/Bildinformation im Simultan-, Flexo- oder Stichtiefdruckverfahren, wodurch auch die Möglichkeit der Mehrfarbigkeit gegeben ist,
- in der Kombination von Aufsichts- und Durchsichtsfeature durch die Kombination von Hohlspiegeln und Lochmaske,
- Einsatz von Lasertechnologie zur Druckplattenherstellung sowie zur Lochmaskenerzeugung.

Weiterer Vorteil gegenüber bekannten Verfahren des Standes der Technik ist die mögliche Kombination aus Mikrohohlspiegeln und Lochmaske, also eine Kombination aus Aufsichts- und Durchsichtsfeature. Ein weiterer Vorteil ist, dass kein speziell zu entwickelndes Druckverfahren erforderlich ist, sondern aus dem Stand der Technik bekannte Druckverfahren eingesetzt werden können.

Weitere Ausführungsbeispiele und Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen schematisch:
- Fig. 1: ein erfindungsgemäßes Sicherheitselement mit Mikrohohlspiegeln, die zusammen mit aufgebrachten Mikrostrukturen ein dynamisches Sicherheitsmerkmal ergeben,
- Fig. 2: einen weiteren Aufbau, bei dem die Vorstrukturierungen von elliptischer Form sind, der Fokus wird erreicht, indem der transparente Lack zu einer bikonvexen Form aushärtet,
- Fig. 3: eine Draufsicht auf eine erfindungsgemäße Hohlspiegelstruktur,
- Fig. 4: ein Substrat mit Folienelement auf Rück- oder Vorderseite und ein Hybridsubstrat mit integriertem Fenster,
- Fig. 5: ein Substrat mit einem erfindungsgemäßen Folienelement, wobei die reflektierende Beschichtung auf der Vorderseite oder der Rückseite des Trägersubstrats angeordnet ist sowie zusätzlich Ausnehmungen aufweist,
- Fig. 6: eine Banknote mit nicht vom Schutzumfang dieser Erfindung erfassten Sicherheitsmerkmalen,
- Fig. 7: eine Stichtiefdruckplatte mit vertiefter/inverser Prägestruktur (Herstellung mittels Lasertechnologie) zur Herstellung von Mikrohohlspiegeln,
- Fig. 8: eine Stichtiefdruckplatte (gefräst) mit Prägestruktur zur Herstellung von Mikrohohlspiegeln,
- Fig. 9: eine Anordnung von beispielsweise halbkugelförmigen Mikrohohlspiegeln in einem wabenförmigen Raster.

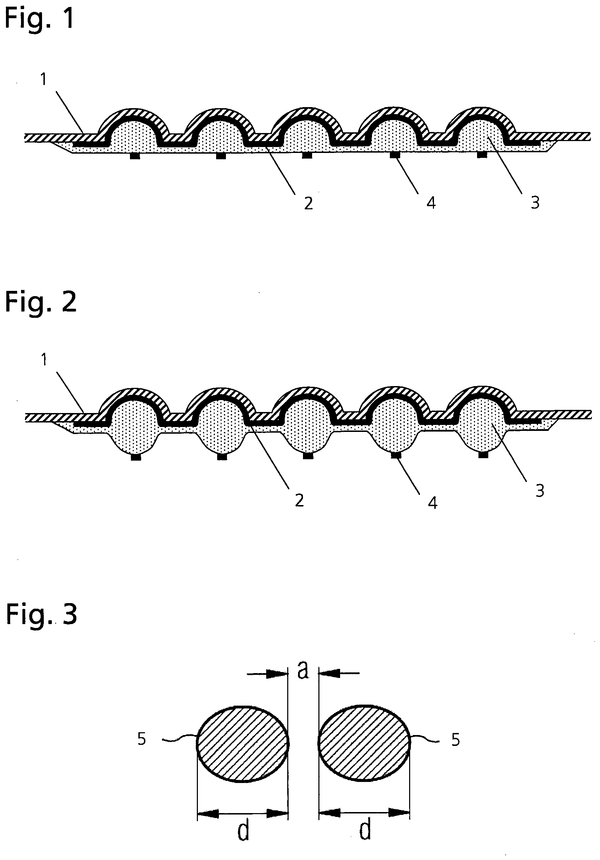

Fig. 1 zeigt ein erfindungsgemäßes Sicherheitselement mit Mikrohohlspiegeln, die zusammen mit aufgebrachten Mikrostrukturen ein dynamisches Sicherheitsmerkmal ergeben.

Hierbei ist ein Substrat 1 mit einer reflektierenden Beschichtung 2 beschichtet, wobei die Vertiefungen im Stichtiefdruckverfahren in das Substrat 1 eingebracht wurden. Die reflektierende Beschichtung 2 ist vorteilhaft als metallische oder metallartige Schicht ausgeführt, beispielsweise mit einem gold-oder silberartigen Farbton, und bedeckt die Mikrohohlspiegel wie dargestellt vollflächig oder auch (nicht dargestellt) teilweise, wobei der Bereich der Vertiefungen die Beschichtung aufweist und die Zwischenräume zwischen den Vertiefungen keine Beschichtung aufweisen. Anschließend wird die Strukturierung mit einer transparenten farblosen oder lasierenden farbigen Lackschicht 3 aufgefüllt und auf diese Lackschicht Mikrostrukturen 4 gedruckt, beispielsweise im Offset-, Sieb- oder Flexodruckverfahren. Die Dicke der entstehenden Lackschicht 3 ist dabei so gewählt, dass die Mikrostrukturen 4 sich im Bereich des Fokus der Mikrohohlspiegel befinden.

Es ergibt sich ein sogenanntes dynamisches Sicherheitsmerkmal, bei dem zum einen die Mikrostrukturen 4 durch die Mikrohohlspiegel für einen Betrachter vergrößert abgebildet werden und sich zum anderen ein Kippeffekt ergibt. Bei einer bestimmten Anordnung der Mikrostrukturen kann sich beispielsweise die vergrößert abgebildete Mikrostruktur bei Kippen des Sicherheitselements in einer dazu um 90° gedrehten Achse bewegen, der sogenannte orthoparallaktische Effekt. Bei einer Kippung des Sicherheitselements um seine Längsachse bewegt sich dabei die Abbildung entlang der Hochachse des Sicherheitselements. Des Weiteren scheint die abgebildete Mikrostruktur oberhalb oder unterhalb der Ebene des Substrats zu schweben.

Die reflektierende Beschichtung 2 kann unabhängig vom Substrat eine voll- oder teilmetallisierte Laminatfolie , eine voll- oder teilmetallisierte Transferfolie oder eine aufgedruckte Spiegelfarbe sein, wobei letztere beispielsweise im Stich,- Offset,- Flexo-, oder Siebdruckverfahren auf das Substrat aufgebracht ist.

Im Grundaufbau entsprechen die entstehenden reflektierenden Strukturen beispielsweise Halbkugeln. Diese werden bevorzugt mit dem transparenten Lack als Abstandshalter gefüllt, um die Mikrostruktur im Fokus der durch die Metallisierung erzeugten Hohlspiegel aufzudrucken. Der Fokusabstand ist hierbei der halbe Radius der Kugelstrukturen.

Fig. 2 zeigt einen alternativen Aufbau, bei dem die Vorstrukturierungen eine elliptische Form aufweisen. Die Anordnung der Mikrostrukturen im Fokus der Vorstrukturierungen wird erreicht, indem die Lackschicht 3 zu einer bikonvexen Form aushärtet.

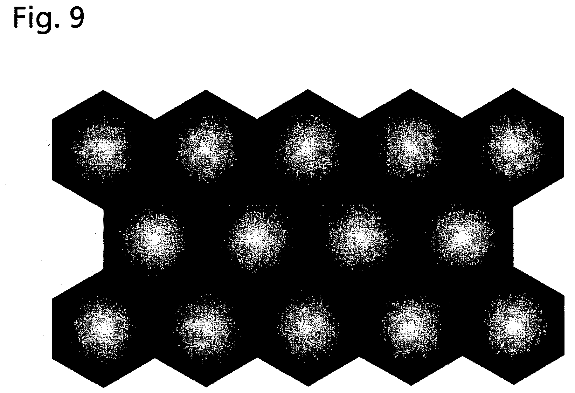

Weitere Ausführungsformen beinhalten alternative Formen der Vorstrukturierung, wie beispielsweise Pyramiden, Quadrate, Polygone (siehe Fig. 9, "Facettenauge"), Halbkugeln, Ellipsen sowie sphärische und asphärische Formen.

Fig. 3 zeigt eine schematische Draufsicht auf zwei benachbarte sphärische Mikrohohlspiegel 5 auf einem nicht dargestellten Trägersubstrat. Die Mikrohohlspiegel 5 besitzen einen Durchmesser d von 50 µm bis 500 µm und in diesem Ausführungsbeispiel einen Abstand a von etwa 2 µm. Der Abstand kann auch auf 0 µm reduziert werden, d.h. die Mikrohohlspiegel würden in diesem Fall direkt aneinanderstoßen. Der maximale Abstand zwischen den Mikrohohlspiegeln sollte die Hälfte des Durchmessers der Mikrohohlspiegel nicht überschreiten. Die räumliche Periodizität einer solchen Anordnung beträgt somit 50 µm bis 500 µm. Die Gravurtiefe der Vertiefungen in der für das Verprägen des Trägersubstrats 5 verwendeten Tiefdruckplatte beträgt 20 µm bis 150 µm. Die Dicke des Trägersubstrats liegt üblicherweise im Bereich von etwa 15 µm bis etwa 100 µm und ist im Idealfall vernachlässigbar.

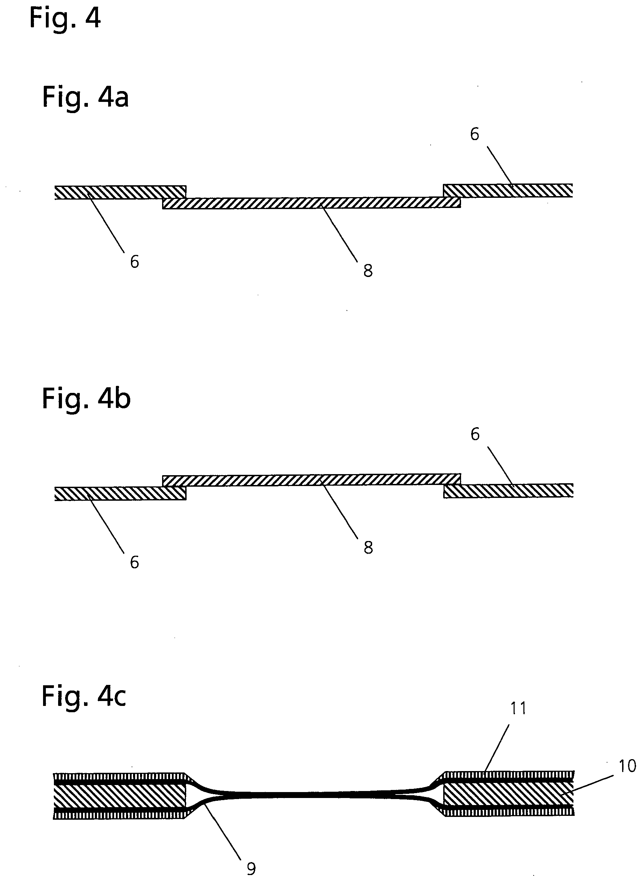

Fig. 4 zeigt eine Ausführungsform, bei der das mit Mikrohohlspiegeln vorstrukturierte Sicherheitselement 8 über einen transparenten Bereich oder eine Öffnung des Substrats 6 hinausragt. Das Substrat kann hierbei entweder ein Papiersubstrat mit einem erfindungsgemäßen Sicherheitselement 8 auf Vorderseite (Fig. 4a) oder Rückseite (Fig. 4b) oder gemäß Fig. 4c ein Hybridsubstrat sein.

Bei der Ausführungsform gemäß Fig. 4c besteht das Substrat aus einem Papierkern 10, der auf der Vorderseite und der Rückseite mit einer transparenten Folie beschichtet ist. Auf der Oberfläche der transparenten Folie ist eine Farbannahmeschicht 11 aufgebracht, die für eine verbesserte Farbannahme der transparenten Folie 9 sorgt. Im Bereich einer Öffnung im Papierkern 10 sind die beiden transparenten Folien 9 aus Vorder- und Rückseite zusammengeführt und bilden dort ein transparentes Fenster, in dem die erfindungsgemäßen Mikrohohlspiegel angeordnet sind.

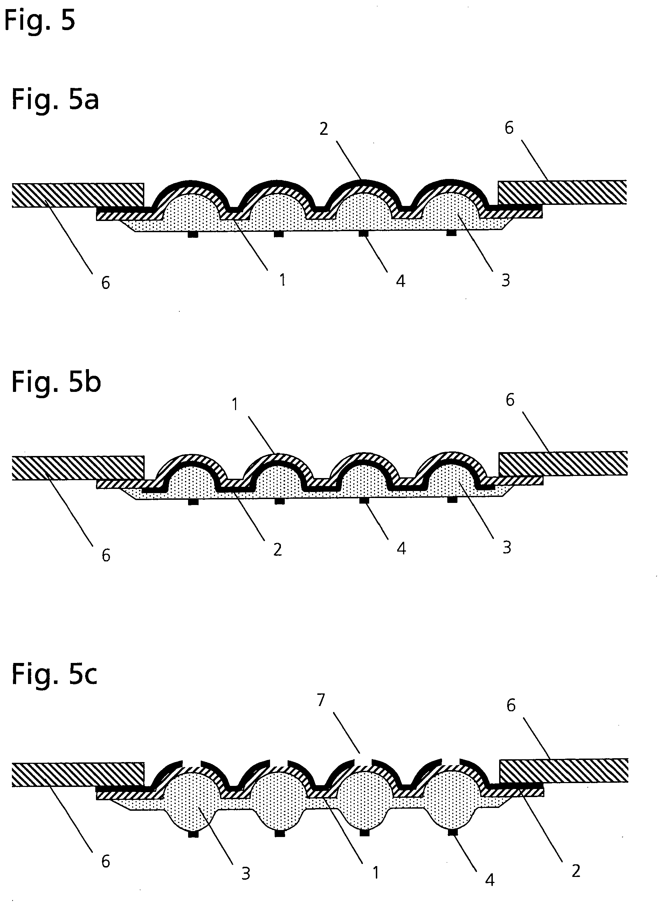

Bei der Anordnung gemäß Fig. 4a und Fig. 4b entspricht der Aufbau des Sicherheitselements grundsätzlich dem oben beschriebenen Grundaufbau. Im Gegensatz bzw. in Ergänzung zu dem oben beschriebenen Grundaufbau sind im transparenten Bereich eines Substrats zwei Varianten des Aufbaus möglich: die reflektierende Beschichtung kann gemäß Fig. 5a entweder auf der Rückseite oder gemäß Fig. 5b auf der Vorderseite des Substrats 1 aufgebracht sein, da in diesem Fall aufgrund der Transparenz des Substrats 1 die reflektierende Beschichtung in beiden Fällen eine Hohlspiegelwirkung erzeugt.

Fig. 5c zeigt eine Ausführungsform, bei der sich im transparenten Bereich ein Aufsichts- und ein Durchsichtsfeature ergeben. Bei dieser Variante erfolgt zunächst im Stichtiefdruck eine Vorstrukturierung des Trägersubstrats in Form von Vertiefungen bzw. Erhöhungen und anschließend ein Auffüllen der Vertiefungen mit transparentem Lack 3, bevorzugt im Sieb-, Offset, -oder Flexodruckverfahren. Anschließend erfolgt der Aufdruck der Mikrostrukturen 4 auf den ausgehärteten Lack 3. Abschließend wird die reflektierende Beschichtung 2 aufgebracht, entweder durch den Druck von reflektierender Farbe im Sieb-, Flexo-, oder Offsetverfahren, wobei als Variante die reflektierende Beschichtung auch bereits vor der Vorstrukturierung aufgedruckt werden kann, oder alternativ die reflektierende Beschichtung vor der Vorstrukturierung schon als Folienelement auf das (Fenster)-substrat aufgebracht wird, beispielsweise in Form einer voll- oder teilmetallisierten Transfer- oder Laminatfolie.

Als Ergänzung zu den oben bereits beschriebenen Sicherheitsmerkmalen, die lediglich in Aufsicht sichtbar sind, ist im Bereich des Fensters ein zusätzlicher Effekt in Durchsicht realisierbar. Grundlage für die Durchsichtsfunktion ist das Prinzip einer Lochmaske, wobei im reflektierend verspiegelten Fensterbereich die reflektierende Beschichtung 3 durch gezielte Laserablation zu einer semitransparenten Schicht umgewandelt wird. Bevorzugt wird jeweils auf dem Scheitelpunkt der Vorstrukturierung die reflektierende Beschichtung 3 mittels Laserverfahren ablatiert bzw. entfernt und damit eine definierte Lochmaske 7 erzeugt. Es bleibt dabei genug reflektierendes Material erhalten, um den Aufsichtseffekt sichtbar zu machen und gleichzeitig ist durch die erzeugte Semitransparenz der Lochmaske 7 in Durchsicht ein Vergrößerungseffekt mit dynamischer Tiefenwirkung zu sehen.

Das Aufsichtsprinzip funktioniert sowohl im semitransparenten als auch im opaken reflektierenden Bereich, ist also unabhängig von transparenten Aussparungen (Fenster) im Substrat. Die Durchsichtsfunktion kann nur in einem transparenten Bereich des Substrats erzeugt werden.

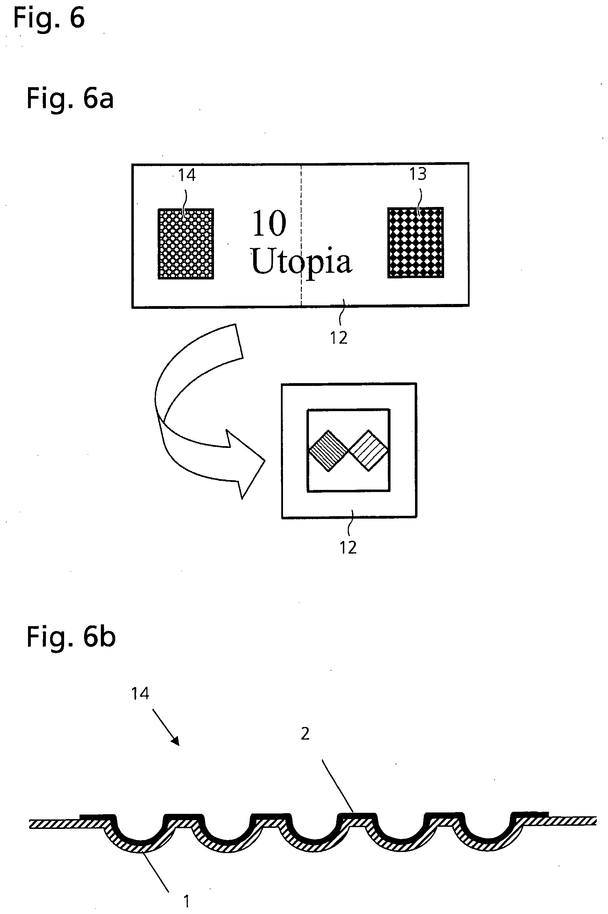

Fig. 6 zeigt ein nicht vom Schutzumfang dieser Erfindung erfasstes Ausführungsbeispiel in Form eines Verifikationsmerkmals auf Basis von Selbstverifikation. Hierbei werden gemäß Fig. 6a zwei Bereiche 13 und 14 auf einer Banknote 12 durch Falten der Banknote 12 entlang der gestrichelten Linie derart übereinandergelegt bzw. in Deckung zueinander gebracht, dass sich ein dynamisches Kippbild ergibt. Der Bereich 13 beinhaltet hierbei das erfindungsgemäße Trägersubstrat mit den Mikrohohlspiegeln, der transparente oder transluzente Bereich 14 die zugehörige Mikrostruktur.

Das Substrat der Banknote 12 kann entweder Papier mit einem Folienelement auf Vorder- oder Rückseite oder ein Hybridsubstrat mit einem Fensterbereich sein.

Gemäß Fig. 6b ist der Bereich 13 mit den reflektierend beschichteten Mikrohohlspiegeln wie folgt aufgebaut:
- Prägen der Vorstrukturierung im nicht farbführenden Stichdruckverfahren und anschließend Erzeugen der reflektierenden Beschichtung 2 durch Bedrucken mit reflektierender bzw. spiegelnder Druckfarbe im Sieb-, oder Flexodruckverfahren, oder
- die reflektierende Beschichtung 2 wird zuerst erstellt, entweder durch Applikation eines metallisierten Folienelements im Transfer- oder Laminierverfahren oder durch Bedrucken mit reflektierender bzw. spiegelnder Druckfarbe im Sieb-, Offset-, oder Flexodruckverfahren und anschließende Strukturierung der Hohlspiegel im Stichtiefdruckverfahren, oder
- Drucken der reflektierenden bzw. spiegelnden Druckfarbe und Strukturierung der Mikrohohlspiegel in einem Durchgang im farbführenden Stichtiefdruckverfahren.

Die Mikrohohlspiegel, die gemäß einem der drei genannten Ausführungsformen hergestellt wurden, können zusätzlich mit transparentem Lack im Siebdruckverfahren gefüllt werden. Bevorzugt kann hierbei durch Beimischung von Fluoreszenz- oder Effektpigmenten (z.B. auf der Basis von Flüssigkristallen) ein zusätzlicher Effekt und die Erhöhung der Fälschungssicherheit erzielt werden.

Der transparente Bereich 14 mit der Bildinformation bzw. den Mikrostrukturen ist wie folgt aufgebaut:
- auf eine Öffnung in der Banknote 12 applizierter Folienstreifen, der im Offset- oder Stichtiefdruckverfahren mit den Mikrostrukturen bedruckt wird, oder
- Hybridsubstrat, das im Bereich 14 einen transparenten Bereich aufweist, der ebenfalls im Offset- oder Stichtiefdruckverfahren mit den Mikrostrukturen bedruckt wird.

Auch hier können der für die Mikrostrukturen verwendeten Druckfarbe für einen zusätzlichen Effekt Fluoreszenz- oder Effektpigmente beigemischt werden.

Indem der mit Mikrostrukturen bedruckte transparente Bereich auf den Hohlspiegelbereich geklappt wird, wird beispielsweise ein aus dem Stand der Technik bekannter Moiré-Magnifier Effekt in Aufsicht sichtbar.

Eine weitere Möglichkeit ist auch hier die Kombination der Hohlspiegel mit einer Lochmaske, also auch hier die Erweiterung um einen Durchsichtseffekt durch die Laserung einer Lochmaske in die Metallisierung.

Grundsätzlich kann bei allen Ausführungsbeispielen zur Erhöhung der Fälschungssicherheit entweder nur der aufgebrachte Lack 3 mit Fluoreszenz-(Nano-) Pigmenten oder Farbstoffen versehen werden, oder auch sowohl der Lack 3 als auch die Druckfarbe der Mikrostrukturen 4 mit unterschiedlichen Fluoreszenz- oder Effektpigmenten versehen werden. Dadurch können z.B. zusätzliche Effekte unter UV-Licht erzeugt werden, beispielsweise blau fluoreszierende Mikrostruktur (beispielsweise Sternchen) auf gelb fluoreszierendem Hintergrund.

Eine weitere Möglichkeit besteht darin, den Lack 3 mit ablatierbaren Pigmenten, beispielsweise Silber, zu versehen, so dass die Mikrostrukturen 4 nicht aufgedruckt werden, sondern mittels Ablation durch Lasertechnik in den Lack 3 "geschrieben" bzw. negativ ausgespart werden.

Die Raster (Linien- und Motivraster) der Mikrostrukturen 4 oder 14 können sowohl im Offset- (direkt und indirekt) als auch im Flexodruckverfahren, sowie im Stichtiefdruckverfahren ein- und mehrfarbig dargestellt werden. Im Stichtiefdruck ist neben der Farbigkeit aufgrund der Auflösungsfeinheit auch eine negative Darstellung der Mikroinformation (Buchstaben, Symbole) möglich.

Da die durch die Mikrohohlspiegel erzeugten Effekte auch auf dem Prinzip eines Moire-Magnifiers beruhen, entspricht der Aufbau der Rasterfelder derjenigen aus WO 2010/015382 A2 und WO 2011/015384 A1, deren Offenbarung diesbezüglich vollumfänglich in diese Beschreibung aufgenommen wird. In der Vergrößerung gibt dies dann beispielsweise die Zahl "50" aus dem Linienfeld, wobei die Zahl je nach Betrachtungswinkel positiv oder negativ dargestellt ist und im Umfeld die vergrößerten Sterne mit dynamischer Tiefenwirkung.

Gemäß einem weiteren Ausführungsbeispiel sind die Mikrohohlspiegel beliebig als Array in Gittern, beispielsweise quadratisch, hexagonal, parallelogrammartig, angeordnet oder auch nur partiell, beispielsweise in definierten Formen angelegt. Die Strukturierung/Prägung kann als Halbkugeln, Ellipsen, sphärischen sowie asphärischen Formen, oder auch Pyramiden, Polygonen, oder in Kombination unterschiedlicher Formen und Winkelungen zueinander erfolgen.

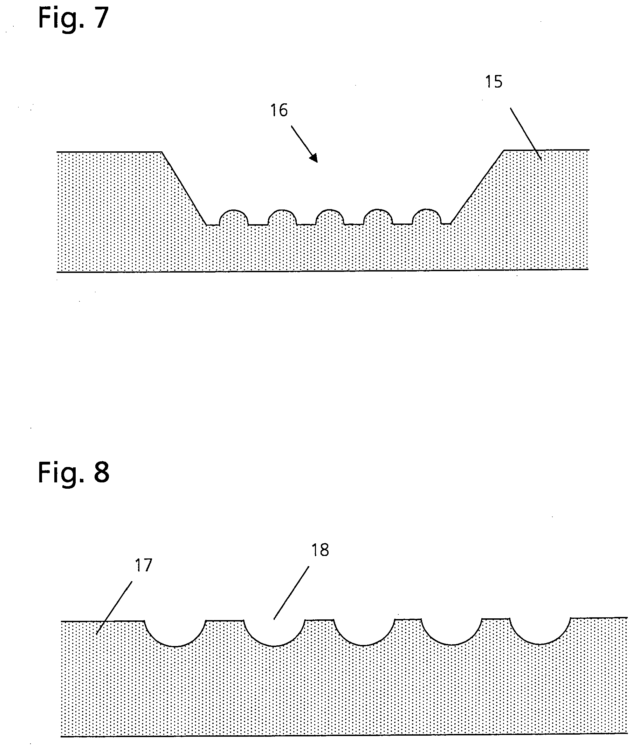

Fig. 7 zeigt eine Stichtiefdruckplatte 15 mit einer Vertiefung 16, auf deren Boden Strukturen angeordnet sind, die Vertiefungen für Mikrohohlspiegel ergeben.

Die Oberfläche der Vertiefung 16 ist gegenüber der Oberfläche der umgebenden Stichtiefdruckplatte 15 abgesenkt, um bei der Vorstrukturierung der Mikrohohlspiegel im Stichtiefdruckverfahren ein Aufrauen der Metallisierung durch das Gegendrucktuch zu vermeiden und somit den Spiegeleffekt zu optimieren. Die Vertiefung 16 wird besonders bevorzugt mittels Laser in die Stichtiefdruckplatte 15 eingebracht, so dass unterschiedlichste Formen der vertieften Vorstrukturierung möglich sind.

Besonderer Vorteil hierbei ist, dass somit die Mikrohohlspiegel auch bei einer Banknote mit einseitigem Vorderseitenstichtiefdruck realisiert werden können und ein maximaler Glanz der reflektierenden Beschichtung in den Spiegeln erreicht wird.

Fig. 8 zeigt eine herkömmliche gefräste Stichtiefdruckplatte 17 mit einer Prägestruktur zur Herstellung von Mikrohohlspiegeln. In die Stichtiefdruckplatte 17 sind Vertiefungen 18 gefräst, die bei der Abformung in ein Substrat Erhöhungen auf der Vorderseite des Substrats ergeben. Auf der Rückseite des Substrats ergeben sich Vertiefungen, die die Mikrohohlspiegel bilden. Diese Mikrohohlspiegel haben jedoch gegenüber den Mikrohohlspiegeln, die durch eine Stichtiefdruckplatte 15 gemäß Fig. 7 erzeugt werden, den Nachteil eines Glanzverlustes, da die Mikrohohlspiegel nicht direkt, sondern indirekt erzeugt werden.

Fig. 9 zeigt Anordnung von beispielsweise halbkugelförmigen Mikrohohlspiegeln in einem wabenförmigen Raster. Hierbei ist die Grundfläche der Mikrohohlspiegel wabenförmig bzw. in Form eines regelmäßigen Sechsecks ausgeführt, so dass zwischen den einzelnen Mikrohohlspiegeln des Rasters keine Zwischenräume auftreten.

## Patentansprüche

1. Verfahren zum Herstellen von Mikrohohlspiegeln, umfassend die Schritte:
- Bereitstellen eines Trägersubstrats (1) und
- Vorstrukturieren des Trägersubstrats (1), so dass auf einer Rückseite des Trägersubstrats (1) Erhebungen entstehen und auf einer der Rückseite gegenüberliegenden Vorderseite des Trägersubstrats (1) den Erhebungen im Wesentlichen entsprechende Vertiefungen entstehen,
- Auftragen einer reflektierenden Beschichtung (2) auf zumindest eine Seite des Trägersubstrats (1) im Bereich der Erhebungen oder Vertiefungen, so dass durch die Vertiefungen von der Vorderseite des Substrats (1) aus gesehen Mikrohohlspiegel gebildet werden,
wobei das Vorstrukturieren des Trägersubstrats (1) durch Verprägen, insbesondere durch Verprägen im Stichtiefdruckverfahren geschieht, **gekennzeichnet dadurch, dass** die Vertiefungen mit einem transparenten Material (3) gefüllt werden und auf die Seite des transparenten Materials (3), die den Vertiefungen gegenüberliegt, eine Mikrostruktur (4) aufgebracht, bevorzugt aufgedruckt oder aufgeprägt wird und wobei die Dicke oder die Form des transparenten Materials (3) so gewählt wird, dass die Mikrostruktur (4) in der Fokusebene der Mikrohohlspiegel liegt.

2. Verfahren nach Anspruch 1, **dadurch gekennzeichnet, dass** das Trägersubstrat (1) als ein Papier und/oder eine Trägerfolie, insbesondere transluzente Trägerfolie, umfassendes Substrat bereitgestellt wird.

3. Verfahren nach Anspruch 2, **dadurch gekennzeichnet, dass** bei einem opaken Trägersubstrat(1), insbesondere aus Papier, die reflektierende Beschichtung (2) auf die Vorderseite des Trägersubstrats (1) aufgebracht wird, und bei einem transluzenten Trägersubstrat (1) die reflektierende Beschichtung (2) auf die Vorderseite oder Rückseite des Trägersubstrats (1) aufgebracht wird.

4. Verfahren nach wenigstens einem der vorhergehenden Ansprüche, **dadurch gekennzeichnet, dass** die reflektierende Beschichtung (2) so auf das Trägersubstrat (1) aufgetragen wird, dass sie zwischen den Mikrohohlspiegeln räumlich unterbrochen ist oder eine durchgehende Schicht bildet.

5. Verfahren nach wenigstens einem der vorhergehenden Ansprüche, **dadurch gekennzeichnet, dass** das Aufbringen der reflektierenden Beschichtung (2) drucktechnisch erfolgt, vorzugsweise im Siebdruck-, Stichtiefdruck-, Offsetdruck- oder Flexodruckverfahren, oder durch Applizieren einer vorgefertigten Schicht mittels Transfer- oder Laminierverfahren erfolgt.

6. Verfahren nach wenigstens einem der vorhergehenden Ansprüche, **dadurch gekennzeichnet, dass** das Verprägen des Trägersubstrats (1) im Stichtiefdruckverfahren mit einer Tiefdruckplatte erfolgt, die Vertiefungen mit einer Gravurtiefe von etwa 20 µm bis etwa 150 µm und einer Gravurbreite von etwa 50 µm bis etwa 500 µm, bevorzugt von etwa 250 µm bis etwa 300 µm aufweist.

7. Verfahren nach Anspruch 6, **dadurch gekennzeichnet, dass** die Vertiefungen in einer regelmäßigen, insbesondere rasterartigen Anordnung erzeugt werden.

## Claims

1. Method for producing concave micromirrors, comprising the steps of:
- providing a carrier substrate (1) and
- pre-structuring the carrier substrate (1) such that elevations are produced on a rear side of the carrier substrate (1) and depressions that substantially correspond to the elevations are produced on a front side of the carrier substrate (1), which lies opposite the rear side,
- applying a reflective coating (2) on at least one side of the carrier substrate (1) in the region of the elevations or depressions, such that concave micromirrors are formed by the depressions as viewed from the front side of the substrate (1),
wherein the pre-structuring of the carrier substrate (1) is effected by embossing, in particular by embossing in intaglio printing methods,
**characterized in that**
the depressions are filled with a transparent material (3) and a microstructure (4) is applied, preferably by printing or embossing, onto the side of the transparent material (3) that lies opposite the depressions, and wherein the thickness or the shape of the transparent material (3) is selected such that the microstructure (4) lies in the focal plane of the concave micromirrors.

2. Method according to Claim 1, **characterized in that** the carrier substrate (1) is provided as a substrate comprising paper and/or a carrier film, in particular a translucent carrier film.

3. Method according to Claim 2, **characterized in that** the reflective coating (2) is applied on the front side of the carrier substrate (1) in the case of an opaque carrier substrate (1), in particular made of paper and the reflective coating (2) is applied on the front side or rear side of the carrier substrate (1) in the case of a translucent carrier substrate (1).

4. Method according to at least one of the preceding claims, **characterized in that** the reflective coating (2) is applied onto the carrier substrate (1) such that it is physically interrupted between the concave micromirrors or forms a contiguous layer.

5. Method according to at least one of the preceding claims, **characterized in that** the application of the reflective coating (2) is effected by printing, preferably in screen printing, intaglio printing, offset printing or flexographic printing methods, or by applying a prefabricated layer by way of transfer or lamination methods.

6. Method according to at least one of the preceding claims, **characterized in that** the embossing of the carrier substrate (1) in the intaglio printing method is effected using a gravure plate having depressions with a gravure depth of approximately 20 µm to approximately 150 µm and a gravure width of approximately 50 µm to approximately 500 µm, preferably approximately 250 µm to approximately 300 µm.

7. Method according to Claim 6, **characterized in that** the depressions are produced in a regular, in particular grid-type arrangement.

## Revendications

1. Procédé de réalisation de micro-miroirs creux comprenant les étapes consistant à :
- fournir un substrat de support (1) et
- pré-structurer le substrat de support (1) de sorte que des bosselages se forment sur un côté arrière du substrat de support (1) et que des cavités, correspondant sensiblement aux bosselages, se forment sur un côté avant du substrat de support (1), opposé au côté arrière,
- appliquer un revêtement réfléchissant (2) sur au moins un côté du substrat de support (1) dans la zone des bosselages ou des cavités de sorte que les cavités, lorsqu'on les observe depuis le côté avant du substrat (1), forment des micro-miroirs creux,
dans lequel la pré-structuration du substrat de support (1) est effectuée par gaufrage, en particulier par gaufrage par impression en taille douce, **caractérisé en ce que** les cavités sont remplies d'un matériau transparent (3) et **en ce qu'**une micro-structure (4) est appliquée, de préférence imprimée ou gaufrée, sur le côté du matériau transparent (3), opposé aux cavités et dans lequel l'épaisseur ou la forme du matériau transparent (3) est choisie de telle sorte que la micro-structure (4) se situe dans le plan focal des micro-miroirs creux.

2. Procédé selon la revendication 1, **caractérisé en ce que** le substrat de support (1) est fourni sous la forme d'un substrat comprenant du papier et/ou un film de support, en particulier un film de support translucide.

3. Procédé selon la revendication 2, **caractérisé en ce que**, dans le cas d'un substrat de support opaque (1), en particulier en papier, le revêtement réfléchissant (2) est appliqué sur le côté avant du substrat de support (1) et **en ce que**, dans le cas d'un substrat de support translucide (1), le revêtement réfléchissant (2) est appliqué sur le côté avant ou le côté arrière du substrat de support (1).

4. Procédé selon au moins l'une des revendications précédentes, **caractérisé en ce que** le revêtement réfléchissant (2) est appliqué sur le substrat de support (1) de telle sorte qu'il soit interrompu spatialement entre les micro-miroirs creux ou forme une couche continue.

5. Procédé selon au moins l'une des revendications précédentes, **caractérisé en ce que** le revêtement réfléchissant (2) est appliqué par impression, de préférence par sérigraphie, impression en taille douce, impression offset ou impression flexographique, ou par application, par transfert ou stratification, d'une couche préformée.

6. Procédé selon au moins l'une des revendications précédentes, **caractérisé en ce que** le gaufrage du substrat de support (1) s'effectue par impression en taille douce avec une plaque d'impression en creux qui présente des cavités ayant une profondeur de gravure d'environ 20 µm à environ 150 µm et une largeur de gravure d'environ 50 µm à environ 500 µm, de préférence d'environ 250 µm à environ 300 µm.

7. Procédé selon la revendication 6, **caractérisé en ce que** les cavités sont produites selon un agencement régulier, en particulier en forme de grille.
